## Europäisches Patentamt

## European Patent Office

## Office européen des brevets

(11) Veröffentlichungsnummer: **0 041 232**
**B2**

(12) **NEUE EUROPÄISCHE PATENTSCHRIFT**

(45) Veröffentlichungstag der neuen Patentschrift:
**07.10.87**

(21) Anmeldenummer: **81104075.7**

(22) Anmeldetag: **27.05.81**

(51) Int. Cl.⁴: **D 21 F 1/00**, F 16 G 3/00

(54) **Verfahren zum Endlosmachen eines Bandes und Schieber zur Verwendung dabei.**

(30) Priorität: **30.05.80 DE 3020690**

(43) Veröffentlichungstag der Anmeldung:
**09.12.81 Patentblatt 81/49**

(45) Bekanntmachung des Hinweises auf die Patenterteilung:
**09.05.84 Patentblatt 84/19**

(45) Bekanntmachung des Hinweises auf die Entscheidung
über den Einspruch:
**07.10.87 Patentblatt 87/41**

(84) Benannte Vertragsstaaten:
**AT BE CH DE FR GB IT LI NL SE**

(56) Entgegenhaltungen:
**DE - A - 1 937 447**
**DE - A - 2 623 437**
**DE - A - 2 703 147**
**FR - A - 2 263 425**
**GB - A - 797 683**
**US - A - 4 035 872**

(73) Patentinhaber: **SITEG Siebtechnik GmbH, Enscheder Strasse 18, D-4422 Ahaus-Alstätte (DE)**

(72) Erfinder: **Lefferts, Johannes, Oldenkottebrink 85, NL-7544 LM Enschede (NL)**
Erfinder: **Roelofs, Roelof, Nico Maasstrasse 60, NL-7555 LT Hengelo (0) (NL)**

(74) Vertreter: **Abitz, Walter, Dr.-Ing. et al, Abitz, Morf, Gritschneder P.O. Box 86 01 09, D-8000 München 86 (DE)**

**Beschreibung**

Die Erfindung betrifft ein Verfahren zum Endlosmachen eines Bandes, z.B. eines Papiermaschinensiebes, insbesondere eines Spiralsiebes nach dem Oberbegriff des Anspruchs 1 sowie einen Schieber zur Verwendung bei diesem Verfahren nach dem Oberbegriff des Anspruchs 4.

Das erfindungsgemässe Verfahren ist in all den Fällen anwendbar, in denen die beiden Bandenden Schlaufen oder Bögen aufweisen, die ähnlich wie bei einem Reissverschluss ineinandergeschoben werden, worauf dann ein Steckdraht in den Kanal eingeschoben wird, der von den ineinandergreifenden Bögen, Schlaufen oder Windungen gebildet wird. Bei Papiermaschinensieben ist es zum Beispiel bekannt, die Kettfadenenden flachgewobener Papiermaschinensiebe zurückzuweben, so dass sich an den Siebenden Schlaufen bilden, die dann auf die eben geschilderte Weise mittels eines Steckdrahtes miteinander verbunden werden können. An den Enden eines flachgewobenen Papiermaschinensiebes können auch Spiralen festgenäht werden, die dann mittels des Steckdrahtes endlosgemacht werden. Bei allen diesen Verfahren besteht eine Schwierigkeit darin, dass die Band- oder Papiermaschinensiebenden zunächst im richtigen Abstand voneinander gehalten werden müssen, damit die Schlaufen, Bögen oder Windungen der beiden Siebenden ineinandergefügt werden können und dass die Siebenden dann nach dem Ineinanderfügen in dieser Lage so lange gehalten werden, bis der Steckdraht eingefügt ist. Da das Endlosmachen eines Papiermaschinensiebes häufig nach dem Einziehen in die Papiermaschine erfolgt, können zum Endlosmachen keine grossen Apparate eingesetzt werden.

Aus der DE-A 2 703 147 ist ein Verfahren bekannt, bei dem eine solche Spiralnaht durchgeführt wird. Um die beiden Siebenden im richtigen Abstand für die Ausführung der Spiralnaht zu halten, wird an jedem Siebende mittels Montagestreifen die eine Hälfte eines Reissverschlusses befestigt, und werden die beiden Siebenden dann durch Schliessen des Reissverschlusses zunächst zusammengebracht und in dieser Lage gahalten. Die Windungen der Spirale werden dann ineinandergefügt und der Steckdraht hindurchgeführt. Die Schwierigkeit bei diesem bekannten Verfahren liegt darin, dass die Montagestreifen genau im richtigen Abstand von den Siebenden an diesen befestigt werden müssen, damit die Windungen der beiden Spiralen ineinandergeschoben werden können.

Der Erfindung liegt die Aufgabe zugrunde, ein einfach durchzuführendes Verfahren zum Endlosmachen eines Bandes zur Verfügung zu stellen, sowie einen Schieber zur Verwendung bei diesem Verfahren zu schaffen.

Diese Aufgabe wird durch die kennzeichnenden Merkmale des Anspruchs 1 bzw. des Anspruchs 4 gelöst.

Der Betrag, auf den die Überlappung der Bandenden verringert wird, bestimmt die Abmessung des Kanals in Sieblängsrichtung nach dem Ineinanderdrücken der Bögen, Windungen bzw. Schlaufen und er ist daher so zu wählen, dass dieser Kanal in Sieblängsrichtung eine ausreichende Breite besitzt, um den Steckdraht einzuschieben. Im allgemeinen gilt, dass die Überlappung der Bandenden auf einen Betrag verringert wird, der etwa der Summe aus der Dicke des Steckdrahtes und der doppelten Stärke der die Bögen, Windungen bzw. Schlaufen bildenden Fäden entspricht.

Das erfindungsgemässe Verfahren und der erfindungsgemässe Schieber eignet sich insbesondere zum Endlosmachen von Spiralsieben, wie sie aus den DE-OS 2 419 751 und 2 938 221 bekannt sind.

Ausführungsbeispiele der Erfindung, die das Endlosmachen eines Papiermaschinensiebes, insbesondere eines Spiralsiebes betreffen, werden nachfolgend anhand der Zeichnung erläutert. Es zeigen:

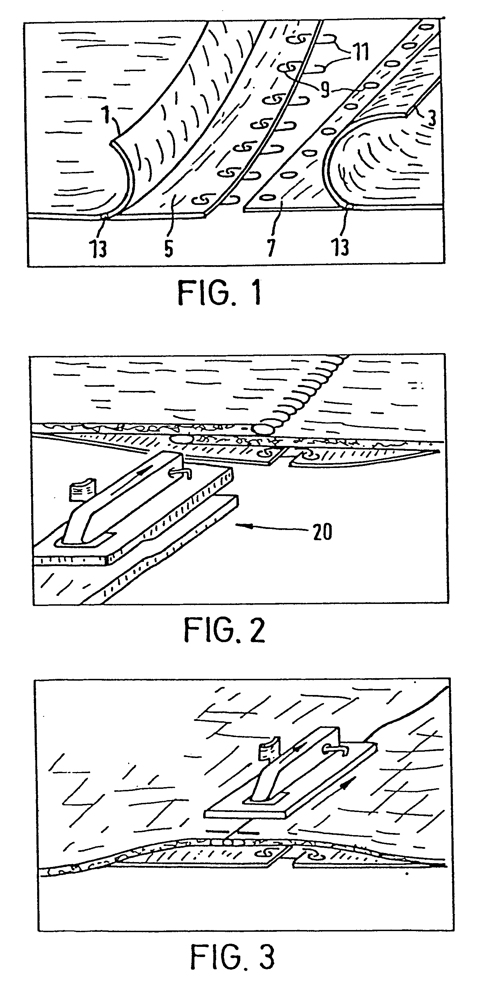

Fig. 1 die beiden Siebenden mit den daran befestigten Montagebändern vor dem Verbinden der beiden Montagebänder;

Fig. 2 das Spiralsieb mit den sich überlappenden Siebenden nach dem Verbinden der Montagebänder;

Fig. 3 das Spiralsieb während des Ineinanderschiebens der jeweils letzten Spiralen der beiden Siebenden, wobei ein Teil der Windungen dieser Spiralen bereits ineinandergeschoben ist;

Fig. 4 einen Schieber in einer Explosionsdarstellung;

Fig. 5 in Draufsicht die Grundplatte und die Zwischenplatte des Schiebers und

Fig. 6 die Grundplatte und die Zwischenplatte einer weiteren Ausführungsform des Schiebers.

Vor dem Endlosmachen eines Spiralsiebes wird dieses zunächst mit Hilfe eines Vorläufers wie üblich in die Papiermaschine eingezogen. Durch Herausziehen des Steckdrahtes wird der Vorläufer nach dem Einziehen des Siebes entfernt.

Mittels Montagestreifen 5, 7 wurden die Siebenden 1, 3 so aneinander befestigt, dass sie sich überlappen. Die Montagestreifen 5, 7 sind dazu in einem bestimmten Abstand von den Siebenden 1, 3 entfernt an dem Sieb befestigt. Dieser Abstand ist so gewählt, dass die Summe der Breite der Montagestreifen 5, 7, d.h. deren Abmessung in Sieblängsrichtung, kleiner ist als die Summe der Abstände, in denen die Montagestreifen 5, 7 von den Siebenden 1, 3 entfernt befestigt sind. In der Praxis hat es sich als zweckmässig erwiesen, wenn der Unterschied etwa dem zehnfachen Abstand zweier benachbarter Steckdrähte in dem Sieb entspricht. Das Verfahren ist aber auch durchführbar, wenn der Unterschied kleiner oder grösser ist.

Die Befestigung der Montagestreifen im Abstand von den Siebenden kann durch Festheften, Festbinden oder dergleichen erfolgen. Als besonders günstig hat es sich erwiesen, wenn die Montagestreifen durch Befestigungsspiralen 13 an den beiden Endstücken des Spiralsiebes befestigt werden. Dazu werden aus dem Gewebe der Montagebänder etwa in der Mitte drei Längsfäden herausgezogen, d.h. Fäden, die in Querrichtung des Siebes verlaufen würden. Zwischen die auf diese Weise in einem kurzen Stück freigelegten Querfäden werden die Windungen der Befestigungsspiralen 13 geschoben. In die Befestigungsspirale 13 ist zuvor ein Steckdraht eingeschoben worden.

Die beiden Befestigungsspiralen 13 werden in dem oben angegebenen Abstand von den Siebenden 1, 3 durch weitere Steckdrähte, z.B. Stahldrähte, an dem Spiralsieb befestigt. Die Befestigung der Montagebänder 5, 7 an dem Spiralsieb erfolgt zweckmässigerweise vor dem Einziehen des Siebes.

In der Praxis hat es sich als vorteilhaft erwiesen, für die Montagestreifen 5, 7 ein Gewebe oder ein Material zu verwenden, das möglichst «lapprig» ist, d.h. eine geringere Stabilität besitzt als das Spiralsieb selbst. Kleine Ungenauigkeiten des Spiralsiebes, z.B. nicht völlig gerader Verlauf der Steckdrähte oder schiefes Einziehen des Spiralsiebes in die Trockengruppe der Papiermaschine, wirken sich dadurch nicht auf die Naht aus und verformen das Spiralsieb nicht wellenförmig, sondern die Montagestreifen nehmen diese Ungenauigkeit auf und verformen sich wellenförmig oder verziehen sich. Wird für die Montagestreifen 5, 7 ein zu stabiles oder zu steifes Gewebe oder Material verwendet, so besteht die Gefahr, dass die Nahtzone Wellen wirft, und dann die Naht nur schwierig zu schliessen ist.

Um die beiden Siebenden 1, 3 nach dem Einziehen des Spiralsiebes in die Papiermaschine zu verbinden, werden dann zunächst die Montagestreifen 5, 7 verbunden. Dies geschieht z.B. durch Haken 11, die in Ösen 9 der beiden Montagestreifen 5, 7 eingehakt werden. Nach dem Verbinden der Montagestreifen 5, 7 sind die Siebenden spannungslos. Aufgrund der oben angegebenen Wahl des Abstandes der Befestigung der Montagestreifen 5, 7 von den Siebenden 1, 3 überlappen sich die Siebenden 1, 3 nach dem Verbinden der Montagestreifen 5, 7. Die Siebenden 1, 3 werden dann von Hand oder mittels des nachfolgend noch beschriebenen Schiebers 20 so weit auseinandergedrückt, dass sie sich gerade noch um etwa die Hälfte der Breite de Spiralen überlappen. Die jeweils letzten Spiralen der beiden Siebenden 1, 3 werden dann durch eine senkrecht zur Siebebene wirkende Kraft auf die eine Spirale und eine entsprechende Gegenkraft auf die andere Spirale ineinandergedrückt. In den durch die Spiralen gebildeten Kanal wird ein Steckdraht eingeschoben. Die beiden Siebenden 1, 3 sind damit verbunden und die Montagestreifen 5, 7 können durch Herausziehen der die Befestigungsspiralen 13 in dem Spiralsieb verankerten Steckdrähte entfernt werden.

Nachfolgend wird der Schieber 20 beschrieben, der die Überlappung der Siebenden 1, 3 auf etwa die Hälfte der Breite der Spiralen verringert und die jeweils letzten Spiralen der beiden Siebenden 1, 3 senkrecht zur Siebebene ineinanderdrückt.

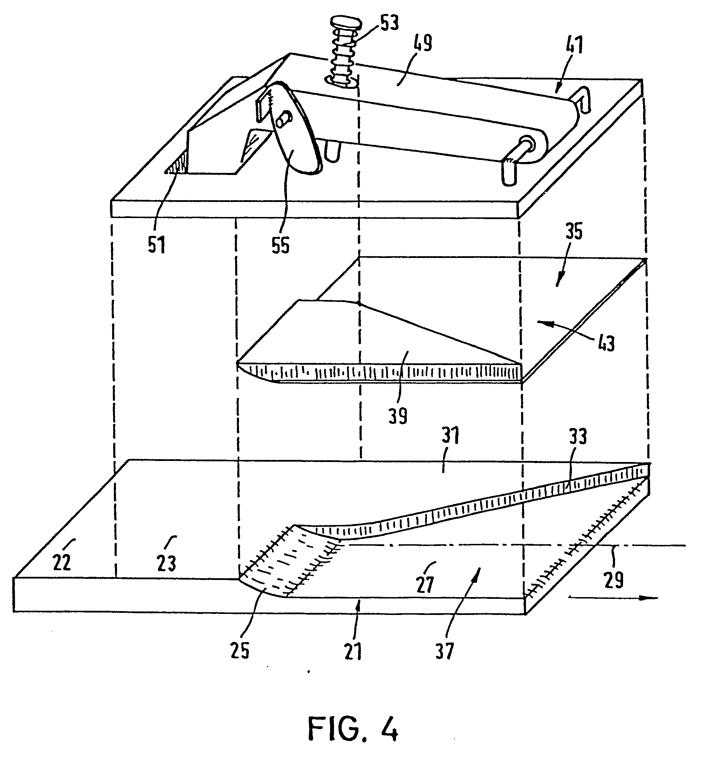

Der Schieber weist eine Grundplatte 21 auf, die in Fig. 4 der Einfachheit halber mit rechteckigem Gundriss dargestellt ist. Die Grundplatte 21 besitzt einen erhöhten Abschnitt 23, der in einer schiefen Ebene 25 in einen tieferliegenden Abschnitt 27 übergeht. Der Übergang von dem erhöhten Abschnitt 23 zu der schiefen Ebene 25 und von dieser in den tieferliegenden Abschnitt 27 ist glatt und ohne Kanten. Die schiefe Ebene 25 verläuft etwa senkrecht zur Längsachse 29 des Schiebers 20. Die Grundplatte 21 weist ferner einen zweiten erhöhten Abschnitt 31 auf, der in einer Stufe 33 von dem tieferliegenden Abschnitt 27 abgesetzt ist. Die Stufe 33 verläuft unter einem sehr spitzen Winkel $\alpha$ zur Längsrichtung 29. Der Winkel $\alpha$ ist zweckmässigerweise kleiner als 20°. Die Erhöhung des ersten erhöhten Abschnittes 23 und des zweiten erhöhten Abschnittes 31 gegenüber dem tieferliegenden Abschnitt 27 ist bei der in Fig. 4 gezeigten Ausführungsform gleich, so dass die beiden erhöhten Abschnitte 23, 31 stufenlos ineinander übergehen.

Über der Grundplatte 21 befindet sich in einem Abstand, der der Höhe der Stufe 33 entspricht, eine Zwischenplatte 35, die den tieferliegenden Abschnitt 27 und den zweiten erhöhten Abschnitt 31 überdeckt. Sie ist mit dem zweiten erhöhten Abschnitt 33 verbunden, z.B. verklebt. Zwischen der Grundplatte 21 und der Zwischenplatte 35 wird ein erster Kanal 37 gebildet, der auf der einen Seite durch die Stufe 33 begrenzt wird und auf der anderen Seite und nach vorne offen ist. Nach hinten steigt der Kanal entlang der schiefen Ebene 25 an und öffnet sich zu dem ersten erhöhten Abschnitt 23. Die Zwischenplatte 35 endet über der schiefen Ebene 25 und ist an dieser Stelle nach oben abgerundet, so dass die Höhe des ersten Kanals 37 im Bereich der schiefen Ebene 25 gleich bleibt. Die Höhe des ersten Kanals 37, die gleich der Höhe der Stufe 3 ist, ist etwas grösser als die Dicke des Spiralsiebes.

Die Zwischenplatte 35 besitzt einen erhöhten Abschnitt 39, der, im Grundriss betrachtet, spiegelbildlich bezüglich der Längsachse 29 zu dem zweiten erhöhten Abschnitt 31 der Grundplatte 21 liegt und dessen Höhe ebenfalls etwas grösser ist als die Siebdicke.

Auf dem erhöhten Abschnitt 39 der Zwischenplatte 35 ist eine Deckplatte 41 befestigt, so dass zwischen der Zwischenplatte 35 und der Deckplatte 41 ein zweiter Kanal 43 gebildet wird, der sich in der gleichen Richtung wie der erste Kanal 37 verjüngt. Dieser zweite Kanal 43 geht bei der in der Fig. 4 gezeigten Ausführungsform praktisch stufenlos in den ersten erhöhten Abschnitt 23 der Grundplatte 21 über.

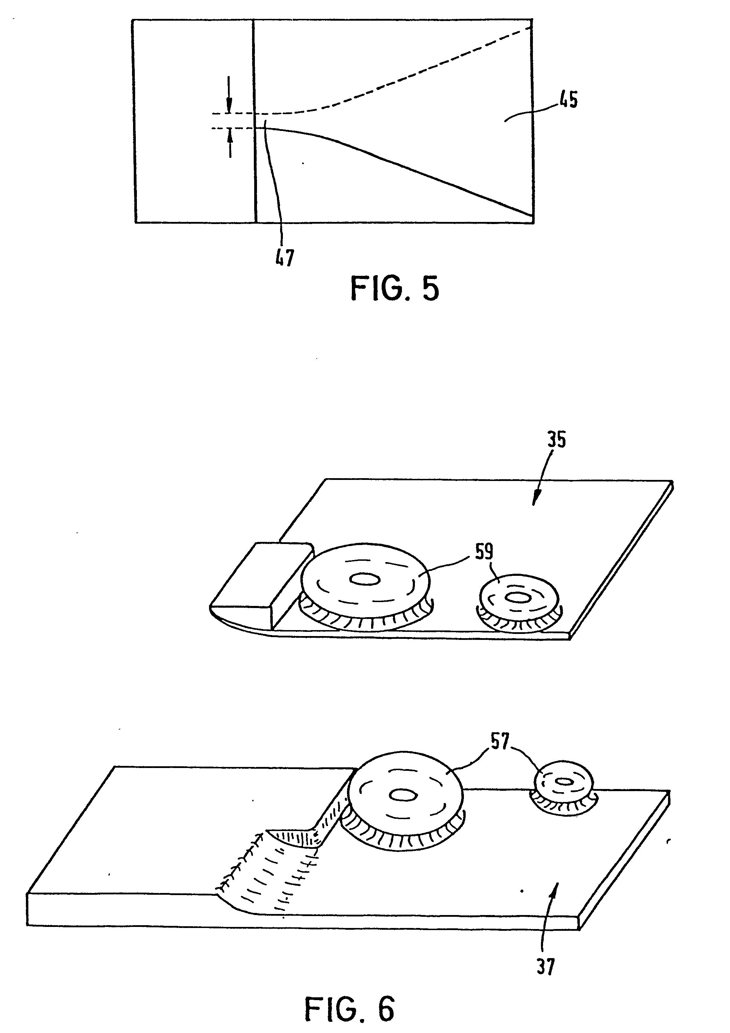

Wie in Fig. 5 gezeigt ist, bilden der erste und der zweite Kanal 37, 43, im Grundriss betrachtet, eine gedachte Überlappungsfläche 45, die spitzwinklig mit einem Winkel von 2 $\alpha$ ist und an der Spitze in einen schmalen Streifen 47 übergeht, dessen Breite etwa der Hälfte der Breite der Spiralen ist, aus denen das Spiralsieb gebildet ist. Der Winkel zwischen der Stufe 33 des zweiten erhöhten Abschnitts 31 und der entsprechenden Stufe des erhöhten Abschnitts der Zwischenplatte 35 zur Längsachse 29 geht also im Bereich des schmalen Steifens 47 allmählich gegen Null.

Die Deckplatte 41 überragt nach hinten die Zwischenplatte 35 und unmittelbar in Verlängerung des schmalen Streifens 47 ist ein Drücker 49 angeordnet, der federnd gegen den ersten erhöhten Abschnitt 23 drückt. Die Breite des Drükkers 49 entspricht mindestens der des schmalen Streifens 47. Wie in Fig. 4 gezeigt, kann der Drükker 49 ein Hebel sein, der durch eine Aussparung 51 in der Deckplatte 41 geführt ist. Der Hebel kann so ausgebildet sein, dass er in angehobener Stellung arretiert werden kann. Bei der in Fig. 4 gezeigten Ausführungsform ist der Hebel an der von der Aussparung 51 entfernten Stelle angelenkt und wird durch einen von der Deckplatte 41 nach oben abstehenden Stift 53 geführt. Gegen ein Widerlager am oberen Ende des Stiftes 53 stützt sich eine Schraubendruckfeder, die den Hebel nach unter drückt. Durch Drehen eines Nockens 55 kann der Hebel in seiner angehobenen Stellung gehalten werden.

Die Grundplatte 21 wiederum überragt zweckmässigerweise die Deckplatte 41 nach hinten und bildet damit eine Unterlage 22, auf der die Windungen der ersten Zentimeter einer Naht von Hand ineinandergedrückt werden können. Falls ein Schieber ohne Drücker 49 verwendet wird, so dient der überstehende Teil 22 der Grundplatte 21 allgemein dazu, auf ihm die Windungen ineinander zu drücken. Bei genauer Bemessung des Abstandes zwischen der Grundplatte 21 und der Deckplatte 41 erübrigt sich ausserdem ein Drükker 49, da die Windungen der Spiralen dann bereits aufgrund des genau bemessenen Abstandes ineinandergedrückt werden.

Der Grundgedanke, auf dem die Konstruktion des Schiebers 20 beruht, besteht darin, dass die beiden Siebenden 1, 3 durch zwei flache, seitlich offene Kanäle auseinandergedrückt werden, deren seitliche Begrenzungen entgegen der Richtung, in der der Schieber 20 bewegt wird, aufeinander zu laufen. Die flachen Kanäle verlaufen in parallelen Ebenen übereinander und vereinigen sich durch Ansteigen des einen bzw. Absenken des anderen Kanals in einem gemeinsamen Kanal, an dessen Anfang die Windungen der Spiralen ineinander eingreifen. An der Stelle, an der die beiden flachen Kanäle in einen gemeinsamen Kanal übergehen, besitzen die seitlichen Begrenzungen der Kanäle dabei einen Abstand, der etwa der halben Spiralbreite entspricht, also dem Betrag, auf den die Überlappung der Siebenden 1, 3 verringert wird.

Der Schieber 20 wird in der Weise verwendet, dass das eine Siebende 1 entlang der Längsachse 29 in den ersten Kanal 37 und das andere Siebende 3 in den zweiten Kanal 43 eingeführt wird. Der Schieber wird dann in Richtung des Pfeiles von Fig. 4 über die Siebbreite geführt. Durch die Stufen 33 werden dabei die sich zunächst relativ weit überlappenden Siebenden 1, 3 so weit gegeneinander verschoben, dass sie sich in dem schmalen Streifen 47 nur noch um die Breite des Streifens 47, also etwa um die halbe Breite einer Spirale des Spiralsiebes, überlappen. In diesem Bereich steigt der erste Kanal 37 durch die schiefe Ebene 25 an, so dass die äussersten Ränder der beiden Siebenden 1, 3 gegeneinander gedrückt werden und die Windungsbögen der jeweils letzten Spiralen der beiden Siebenden 1, 3 ineinandergreifen. Die für das Ineinandergreifen der Spiralwindungen erforderliche Kraft liefert der Drücker 49. Die Siebenden 1, 3 verlassen daher mit ineinandergefügten letzten Spiralen den Schieber 20. In den von den ineinander gefügten letzten Spiralen gebildeten Kanal kann sodann ein Steckdraht eingeschoben werden, womit die Verbindung der beiden Siebenden 1, 3 vollendet ist.

Wie sich aus der eben beschriebenen Anwendung des Schiebers 20 ohne weiteres ergibt, kann der erste erhöhte Abschnitt 23 der Grundplatte 21 entfallen, wenn in diesem Bereich die Deckplatte 41 eine entsprechende Verdickung nach unten besitzt, so dass der freie Abstand zwischen der Grundplatte 21 und der Deckplatte 41 in dem hinter der Zwischenplatte 35 liegenden Bereich wieder etwa der Siebdicke entspricht. Die Hinterkante des zweiten erhöhten Abschnitts 31 der Grundplatte 21 ist in diesem Fall abgerundet und in einer glatten Kurve nach unten gezogen, damit das aus dem zweiten Kanal 43 kommende Siebende möglichst wenig geknickt wird.

Die Grundplatte 21 kann mit einem ersten erhöhten Abschnitt 23 versehen sein, dessen Niveau um etwa die Hälfte des in Fig. 4 gezeigten Betrags über dem tieferliegenden Abschnitt 27 liegt, wenn die Deckplatte 41 in diesem Bereich eine solche Verdickung aufweist, dass der freie Abstand wieder etwa der Siebdicke entspricht. Wesentlich ist nur, dass der erste Kanal 37 und der zweite Kanal 43 in einen unten und oben begrenzten Raum münden, dessen Höhe etwas grösser als die Siebdicke ist.

Um die für das Bewegen des Schiebers und das Schieben der Naht erforderliche Kraft zu verringern, können die Grundplatte 21, die Zwischenplatte 35 und die Deckplatte 41 mit Rollen oder Walzen versehen sein, die die Siebenden 1, 3 führen. In Fig. 6 ist eine Ausführungsform gezeigt, bei der zwei Rollen 57 den zweiten erhöhten Abschnitt 31 der Grundplatte 21 bilden. Ebenso bilden zwei Rollen 59 den erhöhten Abschnitt 39 der Zwischenplatte 35. Die Deckplatte 41 ist in Fig. 6 aus Gründen der Übersichtlichkeit weggelassen. Sie ist bei der in Fig. 6 gezeigten Ausführungsform identisch zu der in Fig. 4 gezeigten Ausführungsform. Zur Verbesserung der Führung der Siebenden, 1, 3 können die Rollen 57, 59 auf ihrem Umfang mit einer Rille oder Nut versehen sein. Um die beiden Rollen 57 und gegebenenfalls ebenso um die beiden Rollen 59 kann zur Verbesserung der Führung der Siebenden 1, 3 ein Bändchen oder Riemen laufen.

Beispiel

Die gewünschte Länge des Spiralsiebes wird auf der einen Seite des Spiralsiebes markiert und die überflüssigen Stücke werden so abgeschnitten, dass die letzte Spirale am einen Siebende links gewunden ist und die letzte Spirale am anderen Siebende rechts gewunden ist.

Es werden dann zwei Montagestreifen mit einer Breite von 20 und 10 cm aus Jutegewebe hergestellt. Dazu werden zwei Jutegewebestreifen mit einer Breite von 30 und 50 cm verwendet und werden in der Mitte drei Kettdrähte herausgezogen, so dass sich in den Jutegewebestreifen kurze Schlitze ergeben. In diese Schlitze werden die Windungen einer feinen Befestigungsspirale gedrückt, nachdem zuvor in die Befestigungsspirale ein Monofil-Steckdraht von 0,7 mm Stärke eingeschoben worden ist. Die Befestigungsspirale besteht aus einem Monofil von 0,5 mm Durchmesser und ist 7,4 mm breit und 3,1 mm dick. Die Befestigungsspiralen werden auf der Seite der Jutestreifen, auf denen sich der Monofil-Steckdraht befindet, mit einem nicht zu dicken Klebeband festgeklebt. Die Jutestreifen werden nun entlang der Befestigungsspirale so gefaltet, dass sich der Monofil-Steckdraht im Inneren befindet und die Windungen der Befestigungsspirale herausschauen. Im Abstand von etwa 15 cm werden noch Heftklammern in die gefalteten Jutestreifen gedrückt, damit sie sich nicht auffalten. Die langen Ränder ohne Befestigungsspirale der Jutestreifen werden nun noch einmal um 5 cm eingeschlagen und mit Klammern geheftet. Diese Ränder werden also noch einmal gefaltet, so dass man in einem Randbereich von 5 cm vier Schichten des Jutegewebes erhält. In diesen Randstreifen werden nun mittels eines Locheisens von 16 mm Durchmesser und im Abstand von 3 cm von den seitlichen Enden und einem Abstand von 25 cm voneinander Löcher gemacht. Die Entfernung vom Rand beträgt 1 cm. In diese Löcher werden nun mit einem Handstempel Messingösen Nr. 8 gedrückt. Die kurzen Ränder werden noch verklebt. Beim Herstellen der Löcher für die Messingösen ist darauf zu achten, dass die Abstände der Ösen in beiden Streifen genau gleich sind. In die Ösen des nun fertigen 20 cm breiten Montagestreifens werden Haken festgemacht.

Die Siebenden werden nun mit der Papierseite nach oben auf einen Tisch gelegt, die Spiralen der Naht, also die jeweils letzten Spiralen der beiden Siebenden, werden ineinandergedrückt und die Laufrichtung wird auf dem Sieb angegeben. An beiden Seiten werden im Abstand von 2 cm vom Siebrand zwei schwarze Striche quer über die Naht gemacht.

Die Montagestreifen werden mittels der Haken miteinander verbunden und auf das Sieb gelegt. Die Mitte der Haken muss etwa 7 cm hinter der Naht liegen. Die Montagestreifen werden dann straffgezogen und auf der Nicht-Papierseite werden die Stellen markiert, an denen die feinen Befestigungsspiralen der Montagestreifen liegen. Diese Markierung erfolgt am besten dadurch, dass man Nadeln durch das Spiralsieb drückt.

Die Siebenden werden dann voneinander getrennt und umgekehrt auf den Tisch gelegt (Papierseite unten). Auch die Montagestreifen werden wieder voneinander getrennt und auf die Nicht-Papierseite des Spiralsiebes gelegt. Von den markierten Stellen werden fünf Spiralen in Richtung von den Siebenden weg übersprungen und in die nächste Spirale des Spiralsiebes werden die feinen Befestigungsspiralen der Montagestreifen gedrückt. Dies lässt sich am besten mit Hilfe eines mit einer Nut versehenen Brettes bewerkstelligen, das unter das Spiralsieb gelegt wird. Die Spiralen werden durch Stahldrähte von 0,7 mm Durchmesser in dem Spiralsieb verankert, wobei die Stahldrähte ähnlich den Steckdrähten in die Spiralen geschoben werden. Die an den beiden Siebrändern herausragenden Enden der Stahldrähte werden an den Siebrändern mit einem Klebeband festgemacht. Die Heftklammern können aus den Montagestreifen entfernt werden.

Zur Kontrolle werden die Siebenden nochmals mit der Papierseite nach oben auf den zuerst genannten Tisch gelegt und werden die Montagestreifen mittels der Haken miteinander verbunden. Die Siebenden müssen sich nun ausreichend überlappen, auch wenn das Spiralsieb angespannt ist. Die Überlappung muss z.B. sieben Spiralen betragen. Mit dem Schieber wird nun probiert, ob die Naht ohne Schwierigkeiten geschlossen werden kann. Wenn alles in Ordnung ist, kann der Vorläufer an das Siebende mit dem schmalen Montagestreifen ohne Haken befestigt werden und kann das Sieb auf ein Rohr gewickelt werden.

Das innere Ende des Spiralsiebes muss vor den Haken geschützt werden, und dazu wird ein schmales Brett mit einer Nut mitaufgewickelt.

Bei der Papiermaschine wird das Spiralsieb mittels des Vorläufers eingezogen und der Vorläufer wird durch Herausziehen des Steckdrahtes entfernt. Die Spanneinrichtung der Papiermaschine wird so weit zurückgedreht, dass die Montagestreifen mittels der Haken verbunden werden können. Die beiden Siebenden werden an einem Ende der Naht in einen Schieber gelegt und im übrigen Bereich überlappend aufeinandergelegt. Beim Aufsetzen des Schiebers wird dabei der Drücker zunächst entlastet. Die ersten Zentimeter der Naht werden von Hand ineinandergedrückt. Die Markierungen an der Naht müssen einander gegenüberliegen. Die beiden äusseren Windungen der Spiralen dürfen dabei nicht gegen die Laufrichtung zeigen. Der Drücker wird dann freigegeben und der Schieber langsam entlang der Naht gezogen. Nachdem die gesamte Naht mittels des Schiebers geschlossen wurde, wird ein Vordraht mit angehängtem Steckdraht durch den von den beiden letzten Spiralen der Siebenden gebildeten Kanal geschoben. Der durchgeschobene Steckdraht wird an beiden Seiten abgeschnitten und die abgeschnittenen Enden werden gegen die Laufrichtung abgebogen und in das Spiralsieb zurückgesteckt. Die Stahl-Steckdrähte der Befestigungsspiralen werden dann herausgezogen, so dass die Montagestreifen abgenommen werden können. Die Siebränder werden an der Nahtstelle noch mit einem Kleber eingestrichen.

**Patentansprüche**

1. Verfahren zum Endlosmachen eines Bandes, dessen Enden Bögen, Windungen oder Schlaufen aufweisen, bei dem Montagestreifen (5, 7) im Abstand von den Bandenden (1, 3) über die Bandbreite befestigt und miteinander verbunden werden, wobei dieser Abstand so gewählt wird, dass sich die Bandenden überlappen, bei dem die Bögen, Windungen bzw. Schlaufen der beiden Bandenden durch eine senkrecht zur Bandebene wirkende Kraft ineinandergedrückt werden und bei dem in den von den ineinandergeschobenen Bögen, Windungen bzw. Schlaufen gebildeten Kanal ein Steckdraht eingeschoben wird, dadurch gekennzeichnet, dass die Bandenden (1, 3) zunächst sich in der Weise überlappend angeordnet werden, dass die Summe der Breiten der beiden Montagestreifen (5, 7) kleiner als die Summe der Abstände gewählt wird, in denen die Montagestreifen (5, 7) von den Bandenden (1, 3) befestigt werden, und dass die Überlappung der Bandenden (1, 3) dann mittels eines Schiebers soweit verringert wird, dass sie etwa der Summe aus der Dicke des Steckdrahtes und der doppelten Stärke der die Bögen, Windungen bzw. Schlaufen bildenden Fäden entspricht, wobei der Schieber zwei seitlich offene Kanäle (37, 43) aufweist, deren seitliche Begrenzungen entgegen der Richtung, in der der Schieber (20) bewegt wird, aufeinander zulaufen, so dass die in den Kanälen (37, 43) geführten Bandenden (1, 3) auseinandergedrückt werden, die Kanäle (37, 43) in parallelen Ebenen übereinander verlaufen und sich durch Ansteigen des einen bzw. Absenken des anderen Kanals in einem gemeinsamen Kanal vereinigen, an dessen Anfang die Windungen der Spiralen ineinandergreifen, und die seitlichen Begrenzungen der Kanäle (37, 43) an der Stelle, an der die beiden flachen Kanäle in den gemeinsamen Kanal übergehen, einen Abstand aufweisen, der etwa der halben Spiralbreite entspricht.

2. Verfahren nach Anspruch 1, dadurch gekennzeichnet, dass die Montagestreifen (5, 7) eine grössere Schmiegsamkeit als das Band besitzen.

3. Verfahren nach Anspruch 1 oder 2, wobei das Band ein Papiermaschinensieb ist, dadurch gekennzeichnet, dass die Montagestreifen (5, 7) vor dem Einziehen des Papiermaschinensiebes in die Papiermaschine an dem Papiermaschinensieb befestigt werden, dass das Papiermaschinensieb in an sich bekannter Weise mittels eines Vorläufers in die Papiermaschine eingezogen wird und der Vorläufer nach dem Einziehen entfernt wird, und dass nach dem Einziehen des Papiermaschinensiebes in die Papiermaschine die Montagestreifen miteinander verbunden werden.

4. Schieber zur Verwendung bei dem Verfahren nach einem der Ansprüche 1 bis 3, gekennzeichnet durch eine Grundplatte (21), eine Zwischenplatte (35), die kürzer ist als die Grundplatte (21), und eine Deckplatte (41), wobei zwischen der Grundplatte (21) und der Zwischenplatte (35) ein sich in der Ebene der Grundplatte (21) verjüngender erster Kanal (37) gebildet ist und zwischen der Zwischenplatte (35) und der Deckplatte (41) ein sich in der Ebene der Zwischenplatte (35) verjüngender zweiter Kanal (43) gebildet ist, beide Kanäle senkrecht zur Grundplatte (21) gesehen eine spitzwinklige Überlappungsfläche (45) bilden, die an der Spitze in einen schmalen Streifen (47) übergeht, dessen Breite etwa dem Betrag entspricht, auf den die Überlappung der Bandenden (1, 3) verringert wird und beide Kanäle im Bereich des schmalen Streifens (47) der Überlappungsfläche (45) auf eine gemeinsame Ebene ansteigen bzw. abfallen.

5. Schieber nach Anspruch 4, dadurch gekennzeichnet, dass unmittelbar hinter dem schmalen Streifen (47) ein Drücker (49) vorgesehen ist, der in Verlängerung des schmalen Streifens (47) der Überlappungsfläche (45) gegen die gemeinsame Ebene der Kanäle drückt.

**Claims**

1. Process for rendering endless a band whose ends have arcs, windings or loops, wherein assembly strips (5, 7) are secured at a spacing from the band ends (1, 3) along the width of the band and are connected together, the spacing being chosen such that the band ends overlap, wherein the arcs, windings or loops of the two band ends are compressed into one another through a force acting perpendicularly to the plane of the band and wherein a pintle wire is inserted into the channel formed by the interengaged arcs, windings or, resp., loops, characterized in that the band ends (1, 3) are at first arranged mutually overlapping in such a manner that the sum of the width of the two assembly strips (5, 7) is selected to be less than the sum of the distances at which the assembly strips (5, 7) are secured from the band ends (1, 3), and in that the mutual overlapping of the band ends (1, 3) is reduced by a slide member to an extent such that it approximately corresponds to the sum of the thickness of the pintle wire and twice the thickness of the filaments forming the arcs, windings, or, resp., loops, slide member comprising two sidewise open channels (37, 43) whose side borders converge in a direction opposite to that in which the slide member (20) is moved so that the band ends (1, 3) guided in the channels (37, 43) are pressed apart from each other, the channels (37, 43) extend in parallel planes on top of each other and join in a common channel by one channel ascending or, resp., the other channel descending, the windings of the spirals interengaging at the beginning of the common channel, and the side borders of the channels (37, 38) having at the site at which the two flat channels go over into the

common channel a spacing which is about half the width of the spirals.

2. The process of claim 1, characterized in that the assembly strips (5, 7) are more pliant than the band.

3. The process of claim 1 or 2, with the band being a paper-maschine screen, characterized in that the assembly strips (5,7) are, prior to pulling of the paper-machine screen into the paper-machine, attached to the paper-machine screen; in that the paper-maschine screen is in per se known manner pulled into the paper-machine by means of a forerunner, and the forerunner is removed after pulling-in, and in that after the paper-machine screen has been pulled into the paper-maschine the assembly strips are connected together.

4. A slide member for use in the process according to one of claims 1 to 3, characterized by a base plate (21), an intermediate plate (35), which is shorter than the base plate (21), and a cover plate (41), with a first channel (37) tapering in the plane of the base plate (21) being formed between the base plate (21) and the intermediate plate (35), and with a second channel (43) tapering in the plane of the intermediate plate (35) being formed between the intermediate plate (35) and the cover plate (41), with both channels forming, viewed perpendicularly to the base plate (21), an area (45) of overlap under an acute angle, which at the tip passes over into a narrow strip (47), whose width corresponds approximately to the amount to which the overlap of the band ends (1, 3) is reduced, and with both channels rising or, resp., dropping to a comon plane in the region of the narrow strip (47) of the area (45) of overlap.

5. Slide member according to claim 4, characterized in that there is provided a pusher (49) directly behind the narrow strip (47), said pusher pushing against the common plane of the channels in the extension of the narrow strip (47) of the overlapping area (45).

**Revendications**

1. Procédé pour rendre sans fin une bande dont les extrémités présentent des arcs, des spires ou des boucles, dans lequel on fixe sur la largeur de la bande de montage (5, 7), à une certaine distance des extrémités de la bande (1, 3), et on les assemble les unes aux autres, cette distance étant choisie de façon que les extrémités de la bande soient en chevauchement, dans lequel les arcs, les spires ou les boucles des deux extrémités de la bande sont enfoncés les uns dans les autres grâce à une force agissant perpendiculairement au plan de la bande, et dans lequel un fil d'insertion est enfilé dans le passage formé par les arcs, spires ou boucles interpénétrés les uns dans les autres, caractérisé en ce que les extrémités de la bande (1, 3) sont d'abord disposées en chevauchement de telle sorte que la somme des largeurs des deux bandes de montage (5, 7) soit choisie inférieure à la somme des distances auxquelles les bandes de montage (5, 7) sont fixées par rapport aux extrémités de la bande (1, 3), et en ce que le chevauchement des extrémités de la bande (1, 3) est ensuite diminué, à l'aide d'un curseur, jusqu'à ce qu'il corresponde approximativement à la somme de l'épaisseur du fil d'insertion et du double de l'épaisseur des fils formant les arcs, spires ou boucles, le curseur présentant deux passages latéralement ouverts (37, 43), dont les délimitations latérales se rapprochent l'une de l'autre, dans le sens opposé au sens de déplacement du curseur (20), de sorte que les extrémités de la bande (1, 3) passant dans les passages (37, 43) sont écartées l'une de l'autre, les passages (37, 43) courent l'un au-dessus de l'autre dans des plans parallèles et se réunissent en un passage commun, grâce à la montée d'un passage et à l'abaissement de l'autre passage, canal commun au début duquel les spires des spirales pénètrent les unes dans les autres, et les délimitations latérales des passages (37, 43), au point où les deux passages plats se convertissent en un passage commun, présentent une distance approximativement égale à la moitié de la largeur des spirales.

2. Procédé selon la revendication 1, caractérisé en ce que les bandes de montage (5, 7) présentent une souplesse supérieure à la bande.

3. Procédé selon la revendication 1 ou 2, dans lequel la bande est une toile pour machine à papier, caractérisé en ce que les bandes de montage (5, 7) sont fixées sur la toile de la machine à papier avant mise en place de la toile pour machine à papier dans la machine à papier, en ce que la toile pour machine à papier est introduite dans la machine à papier à l'aide d'une amorce d'une manière connue en soi, l'amorce étant enlevée après la mise en place, et, en ce que, après mise en place de la toile pour machine à papier dans la machine à papier, on assemble les unes aux autres les bandes de montage.

4. Curseur destiné à une utilisation dans le procédé selon l'une des revendications 1 à 3, caractérisé par une plaque de base (21), une plaque intermédiaire (35) qui est plus courte que la plaque de base (21), et une plaque de couverture (41), un premier passage (37), qui se rétrécit dans le plan de la plaque de base (21), étant formé entre la plaque de base (21) et la plaque intermédiaire (35), et un deuxième passage (43), qui se rétrécit dans le plan de la plaque intermédiaire (35), étant formé entre la plaque intermédiaire (35) et la plaque de couverture (41), les deux passages, en les regardant perpendiculairement à la plaque de base (21), formant une surface de chevauchement à angle aigu (45), qui, au niveau de sa pointe, se convertit en une bande étroite (47), dont la largeur correspond approximativement à la longueur à laquelle est réduit le chevauchement des extrémités de la bande (1, 3), et les deux passages, dans la zone de la bande étroite (47) de la surface de chevauchement (45), respectivement montent et descendent sur un plan commun.

5. Curseur selon la revendication 4, caractérisé en ce qu'il est prévu immédiatement en arrière de la bande étroite (47) un presseur (49) qui, dans le prolongement de la bande étroite (47) de la surface de chevauchement (45), appuie contre le plan commun des passages.

FIG. 1

FIG. 2

FIG. 3

FIG. 4

FIG. 5

FIG. 6